# EUROPÄISCHE PATENTSCHRIFT

(11) **EP 4 480 130 B1**
(45) Veröffentlichungstag und Bekanntmachung des Hinweises auf die Patenterteilung: **23.07.2025**
(21) Anmeldenummer: 24718784.2
(22) Anmeldetag: 11.04.2024
(51) Int. Cl.: H04L 9/08, H04L 9/14

(54) **VERFAHREN ZUR VERSCHLÜSSELTEN KOMMUNIKATION ZWISCHEN COMPUTERSYSTEMEN UND FAHRZEUG**
METHOD FOR ENCRYPTED COMMUNICATION BETWEEN COMPUTER SYSTEMS, AND VEHICLE
PROCÉDÉ DE COMMUNICATION CHIFFRÉE ENTRE DES SYSTÈMES INFORMATIQUES ET VÉHICULE

(30) Priorität: 08.05.2023 DE 102023001848
(43) Veröffentlichungstag der Anmeldung: 25.12.2024
(73) Patentinhaber: Mercedes-Benz Group AG, 70372 Stuttgart (DE)
(72) Erfinder: ZOU, Peiguo, 70565 Stuttgart (DE)
(74) Vertreter: Novagraaf Group
(86) Internationale Anmeldenummer: PCT/EP2024/059759
(87) Internationale Veröffentlichungsnummer: WO 2024/231016

(56) Entgegenhaltungen:
- DE-A1- 102013 110 552
- DE-B3- 102016 109 125
- US-A1- 2018 255 023

## Beschreibung

Die Erfindung betrifft ein Verfahren zur verschlüsselten Kommunikation zwischen Computersystemen sowie ein Fahrzeug.

Maschinelles Lernen wird in der Praxis häufig eingesetzt, um Vorhersagemodelle für Anwendungen wie Bildverarbeitung, Sprach- und Texterkennung und dergleichen zu erzeugen. Dabei werden große Datenmengen im Laufe der Zeit gesammelt und verarbeitet. Diese massive Datensammlung wirft jedoch Datenschutzbedenken auf. Es ist daher notwendig, geeignete Maßnahmen zu treffen, um die Privatsphäre von Nutzern im Zusammenhang mit der Erzeugung von Trainingsdaten für maschinelles Lernen zu wahren. Dies trifft insbesondere auf die sogenannte Mehrparteienberechnung zu, bei der ein Maschinenlernmodell auf Basis von einer Vielzahl unterschiedlicher Nutzer generierter Daten trainiert wird.

Die US 2020/0242466 A1 offenbart ein Verfahren für maschinelles Lernen unter Wahrung der Privatsphäre. Dabei werden von mehreren Datenclients geheim geteilte private Daten auf K Trainingscomputern gespeichert. Es werden Werte für einen Satz von d Gewichtungen W für ein maschinelles Lernmodell initialisiert, wobei die Gewichtungen unter den K Trainingscomputern geheim geteilt werden. Die Gewichtungen und die Merkmale sind Dezimalwerte, die verschoben und als ganze Zahlen gespeichert werden. Nachteilig ist dabei, dass der differenzielle Datenschutz durch Eliminierung und Quantifizierung der Wahrscheinlichkeit von Informationslecks die Modellgenauigkeit erheblich beeinträchtigen kann.

Ferner offenbart die US 10,601,786 B2 eine Privatsphäre erhaltenes System für Trainingsdaten für maschinelles Lernen. Das System offenbart das Anonymisieren von Sensordaten, um maschinelles Lernen zu erleichtern, ohne die Identität eines zugehörigen Benutzers preiszugeben. Während des Betriebs empfängt das System die von einem Schlüsselerzeuger verschlüsselten Sensordaten über einen Gateway-Server, wobei die verschlüsselten Sensordaten eine Client-Kennung enthalten, die einem zugeordneten Benutzer oder Client-Gerät entspricht und von einem Geräte-Maskierer mit einer anonymisierten Kennung zum maschinellen Lernen ersetzt wird. Nachteilig ist dabei, dass der Schlüsselerzeuger, der Gateway-Server und der Geräte-Maskierer alle sicherheitsrelevanten Informationen, wie die zum Verschlüsseln und Entschlüsseln erzeugten Schlüssel, personenspezifische Daten sowie besagte Client-Kennung enthalten. Somit beteiligen sich der Schlüsselerzeuger, der Gateway-Server und der Geräte-Maskierer als Dritte im System, die zusätzlich als vertrauenswürdige Dritte autorisiert und besonders geschützt werden müssen. Dies erhöht den Aufwand und stellt einen Angriffspunkt dar, der daher als Schwachstelle für die Datensicherheit erachtet werden muss.

Ferner offenbart die US 2019/0113973 A1 ein System und ein Verfahren zum Sammeln, Analysieren und Teilen von Biosignal- und Nicht-Biosignal-Daten. Dabei werden mittels EEG Hirnströme eines Nutzers gemessen. Durch eine Analyse der Hirnströme lassen sich Muster in den Hirnströmen identifizieren, welche wiederum zur Erzeugung eines kryptografischen Schlüssels verwendet werden. Der kryptografische Schlüssel kann zum Ver- und/oder Entschlüsseln von Daten, beispielsweise in einem asymmetrischen Verschlüsselungsverfahren eingesetzt werden. Dabei verarbeitete Daten sind durch einen Nutzernamen und ein Passwort vor einem Zugriff durch Unbefugte geschützt.

Ferner sind hybride Verschlüsselungstechnologien bekannt, bei denen symmetrische und asymmetrische Verschlüsselungstechnologien miteinander kombiniert werden. Die asymmetrische Verschlüsselung setzt dabei den Austausch von zwei verschiedenen asymmetrischen Schlüsselpaaren zwischen einer verschlüsselte Daten versendenden und einer verschlüsselte Daten empfangenden Partei voraus.

Die Anwendung einer solchen hybriden Verschlüsselungstechnologie ist beispielsweise aus der DE 10 2016 109 125 B3 bekannt.

Die US 2018/255023 A1 offenbart ein Verfahren zum Anonymisieren von Sensordaten, um maschinelles Lernen zu vereinfachen, ohne eine damit verbundene Identität eines Nutzers offenzulegen. Es wird hierfür eine sichere Enklave vorgeschlagen, innerhalb derer ein erster symmetrische Schlüssel generiert wird. Dieser Schlüssel wird dann innerhalb der sicheren Enklave mit einem öffentlichen "Client"-Schlüssel verschlüsselt und dann einem mobilen "Client" via eines "Gateway Servers" übermittelt. Darüber hinaus werden Ergebnisdaten mit demselben Schlüssel verschlüsselt wie die Trainingsdaten.

Der vorliegenden Erfindung liegt die Aufgabe zugrunde, ein verbessertes Verfahren zur verschlüsselten Kommunikation zwischen Computersystemen anzugeben, welches sich durch eine hohe Cybersicherheit und einen hohen Datenschutz auszeichnet.

Erfindungsgemäß wird diese Aufgabe durch ein Verfahren zur verschlüsselten Kommunikation zwischen Computersystemen mit den Merkmalen des Anspruchs 1 gelöst. Vorteilhafte Ausgestaltungen und Weiterbildungen sowie ein an der Ausführung des Verfahrens beteiligtes Fahrzeug ergeben sich aus den hiervon abhängigen Ansprüchen.

Ein Verfahren zur verschlüsselten Kommunikation zwischen Computersystemen sieht erfindungsgemäß vor, dass
- eine Recheneinheit Trainingsdaten bereitstellt;
- die Recheneinheit ein RSA-Schlüsselpaar, umfassend einen privaten Schlüssel und einen öffentlichen Schlüssel, bereitstellt;
- die Recheneinheit den öffentlichen Schlüssel in einem Schlüsselspeicher einer externen Trainingseinheit hinterlegt;
- die Recheneinheit einen ersten AES-Einmalschlüssel erzeugt;
- die Recheneinheit die Trainingsdaten mit dem ersten AES-Einmalschlüssel verschlüsselt;
- die Recheneinheit den ersten AES-Einmalschlüssel mit dem privaten Schlüssel verschlüsselt;
- die Recheneinheit die verschlüsselten Trainingsdaten und den verschlüsselten ersten AES-Einmalschlüssel an die Trainingseinheit übermittelt;
- die Trainingseinheit sämtliche in dem Schlüsselspeicher hinterlegten öffentlichen Schlüssel zum Entschlüsseln des empfangenen ersten AES-Einmalschlüssels durchprobiert, solange bis die Trainingseinheit den ersten AES-Einmalschlüssel entschlüsselt;
- die Trainingseinheit mit dem entschlüsselten ersten AES-Einmalschlüssel die Trainingsdaten entschlüsselt;
- die Trainingseinheit die Trainingsdaten verarbeitet;
- die Trainingseinheit einen zweiten AES-Einmalschlüssel erzeugt;
- die Trainingseinheit im Zuge der Verarbeitung der Trainingsdaten Ergebnisdaten berechnet und die Ergebnisdaten mit dem zweiten AES-Einmalschlüssel verschlüsselt;
- die Trainingseinheit den zweiten AES-Einmalschlüssel mit dem aus dem Schlüsselspeicher aufgefundenen passenden öffentlichen Schlüssel verschlüsselt;
- die Trainingseinheit die verschlüsselten Ergebnisdaten und den verschlüsselten zweiten AES-Einmalschlüssel an die Recheneinheit zurückübermittelt; und
- die Recheneinheit den zweiten AES-Einmalschlüssel mit dem privaten Schlüssel entschlüsselt und mit dem entschlüsselten zweiten AES-Einmalschlüssel die Ergebnisdaten entschlüsselt.

Hierdurch wird ein bezüglich der Cybersicherheit und des Datenschutzes besonders sicheres und gleichzeitig unaufwändiges Kommunikationsverfahren bereitgestellt. Für den Schlüsselaustausch sind lediglich die Recheneinheit und die Trainingseinheit erforderlich, was das Durchführen des erfindungsgemäßen Verfahrens unter Verwendung eines vergleichsweise einfachen Hardwareaufbaus erlaubt. Das erfindungsgemäße Verfahren kann somit einfach und kostengünstig umgesetzt werden.

Bei der Trainingseinheit handelt es sich um ein zur Recheneinheit separates Computersystem. Es kann sich jeweils beispielsweise um ein Computersystem in Form eines Desktopcomputers, eines Servers, eines Laptops oder dergleichen handeln. Die Trainingseinheit dient zum Einlesen und Verarbeiten der Trainingsdaten.

Gemäß einer besonders vorteilhaften Ausführungsform des Verfahrens, umfasst das Verarbeiten der Trainingsdaten durch die Trainingseinheit das Trainieren eines Maschinenlernmodells. Hierzu können bewährte Lernmethoden, wie beispielsweise das bestärkende Lernen, zum Einsatz kommen. Die Trainingsdaten können dann Messdaten und Sollergebnisdaten enthalten, wobei das Maschinenlernmodell dazu trainiert wird in Abhängigkeit der Messdaten entsprechende Sollergebnisdaten zu liefern. Nach dem Trainingsprozess können dann dem Maschinenlernmodell lediglich neue Messdaten zugeführt werden, wobei das Maschinenlernmodell dann dazu in der Lage ist, dank des Trainings, daraus Ergebnisdaten abzuleiten. Unter Berücksichtigung dieses Einsatzzwecks werden die von der Recheneinheit und der Trainingseinheit verarbeiteten Daten Trainingsdaten und Ergebnisdaten genannt. Generell handelt es sich jedoch einfach um computerlesbare Daten. Die Bezeichnung in Trainingsdaten und Ergebnisdaten dient lediglich dazu die beiden Datensätze unterscheiden zu können.

Im weiteren Verlauf wird das Verarbeiten der Trainingsdaten und Erzeugen der Ergebnisdaten immer im Kontext des Trainierens des Maschinenlernmodells beschrieben. Es wird darauf hingewiesen, dass jedoch generell die Datenverarbeitung auch aus anderen Gründen und in anderem Kontext erfolgen kann.

Bevorzugt umfasst die Trainingseinheit besonders rechenstarke Hardwarekomponenten, wie leistungsfähige Ein- oder Mehrkern-CPUs sowie leistungsfähige Grafikprozessoren, auch als Graphics-Processing-Unit (GPU) bezeichnet. Insbesondere handelt es sich bei der Trainingseinheit um eine Komponente eines Backends. Hierauf wird später noch eingegangen. Mit Hilfe rechenstarker Hardware lässt sich die Verarbeitungsdauer von Daten mit Hilfe von künstlicher Intelligenz beschleunigen.

Die Trainingseinheit kann von einer Vielzahl unterschiedlicher Recheneinheiten Trainingsdaten empfangen. Entsprechend werden im Schlüsselspeicher der Trainingseinheit die öffentlichen Schlüssel dieser Recheneinheiten vorgehalten. Die Trainingsdaten werden so aufbereitet, dass keinerlei Rückbezüge zu bestimmten Personen bzw. zur jeweiligen Recheneinheit selbst möglich sind. Beim Hinterlegen des öffentlichen Schlüssels der Recheneinheit im Schlüsselspeicher werden ebenfalls keine Informationen gespeichert, die einen Rückschluss zulassen, welcher öffentliche Schlüssel von welcher Recheneinheit mit dem RSA-Verfahren für bestimmte Nutzer stammt. Somit wird gewährleistet, dass ein anonymes Übertragen von Trainingsdaten zwischen Recheneinheit und Trainingseinheit möglich ist.

Die Trainingseinheit verfügt damit also über keinerlei Informationen welcher öffentliche Schlüssel zum Entschlüsseln des verschlüsselten ersten AES-Einmalschlüssels, der von der Recheneinheit empfangen wurde, verwendet werden muss. Dies ist essentiell, um den Datenschutz zu gewährleisten. Entsprechend muss die Trainingseinheit sämtliche im Schlüsselspeicher hinterlegten öffentlichen Schlüssel zum Entschlüsseln durchprobieren. Hierdurch steigt zwar die Latenz, jedoch kann auf das Vorsehen separater in den Verschlüsselungsprozess involvierter Recheneinheiten verzichtet werden, sodass auch weniger Computersysteme gegenüber Angriffen abgesichert werden müssen. Hierdurch sinkt das Risiko von Datenlecks.

Durch das Verschlüsseln der Trainingsdaten mit dem ersten AES-Einmalschlüssel bilden die Trainingsdaten sensible Daten aus, die vor einem Zugriff durch Unbefugte zu schützen sind.

Das erfindungsgemäße Verfahren erlaubt es nicht nur datenschutzkonform Maschinenlernmodelle zu trainieren (bzw. Daten zu übertragen), sondern im Trainingsprozess generierte Ergebnisse (bzw. allgemein Ergebnisdaten) auch noch datenschutzkonform an die entsprechende Recheneinheit, die die Trainingsdaten geliefert hat, zurück zu übermitteln. Bei den Ergebnisdaten kann es sich sowohl um das trainierte Maschinenlernmodell selbst handeln oder aber das vom Maschinenlernmodell berechnete Endergebnis. So können die Trainingsdaten Eingangsgrößen für das Maschinenlernmodell darstellen, woraufhin das Maschinenlernmodell ein Endergebnis berechnet. Als Eingangsdaten können beispielsweise Kamerabilder fungieren, in denen das Maschinenlernmodell als Endergebnis Objekte erkennt und klassifiziert.

Ein Novum an dem erfindungsgemäßen Verfahren ist darin zu sehen, dass für eine verschlüsselte Kommunikation zwischen Trainingseinheit und Recheneinheit keine zwei unterschiedlichen RSA-Schlüsselpaare ausgetauscht werden, sondern das von der Recheneinheit generierte RSA-Schlüsselpaar zum Entschlüsseln und Verschlüsseln sowohl von der Recheneinheit verschickter Nachrichten als auch von der Trainingseinheit verschickter Nachrichten dient. Dies sorgt für eine besonders effiziente Datenverarbeitung.

Das Erfindungsgemäße Verfahren zur verschlüsselten Kommunikation kann in folgendem Verfahren zum sicheren Abspeichern von Daten zum Einsatz kommen, welches vorsieht, dass
- sich wenigstens zwei unterschiedliche Nutzer zu verschiedenen Zeitpunkten an einem Gruppengerät mit einem Nutzernamen und nutzerspezifischen Passwort anmelden;
- während ein Nutzer am Gruppengerät angemeldet ist, nutzerspezifische Trainingsdaten vom Gruppengerät gesammelt und als sensible Daten gespeichert werden, wobei der Zugriff auf sensiblen Daten durch den Nutzernamen und das Passwort geschützt wird.

Das Gruppengerät ermöglicht eine Nutzung durch verschiedene Nutzer. Durch die Verwendung individueller Nutzernamen und nutzerspezifischer Passwörter erhält jeder Nutzer ausschließlich Zugriff auf die selbst generierten Trainingsdaten. Hierdurch wird der Datenschutz gewahrt, da Nutzer keine personenbezogenen Daten von anderen Nutzern einsehen können. So gibt das Gruppengerät keinerlei Möglichkeiten einem Nutzer die personenbezogenen Daten eines anderen Nutzers zu lesen, geschweige denn zu manipulieren.

Bei dem Gruppengerät handelt es sich um eine Recheneinheit im Sinne der Erfindung, wie ein mobiles Endgerät, ein eingebettetes System, beispielsweise ausgeführt als sogenanntes System on a Chip (SoC), einen Desktopcomputer, einen Server oder dergleichen.

Bei den Trainingsdaten handelt es sich insbesondere um Daten, die bei der Nutzung des Gruppengeräts bzw. eines dem Gruppengerät übergeordneten Systems anfallen. Beispielsweise kann das Gruppengerät in ein Fahrzeug integriert sein. Die Trainingsdaten beschreiben dann im Zusammenhang mit der Nutzung des Fahrzeugs generierte Daten wie beispielsweise die Art und Weise, wie Fahrzeugkomponenten bedient werden, das Fahrverhalten des Nutzers, die verwendete Reiseroute, vom Fahrzeug mit Hilfe von Sensoren generierte Daten und dergleichen. Beispielsweise kann das Fahrzeug mit Hilfe der Sensoren sein Umfeld erfassen. Als Sensoren kann das Fahrzeug beispielsweise Kameras, Laserscanner, Radarsensoren, Ultraschallsensoren, Mikrofone und dergleichen verwenden. Die vom Fahrzeug erhobenen und mit dem Gruppengerät geteilten bzw. im Gruppengerät gespeicherten Daten können auch Fahrzeuguntersysteme betreffen, wie beispielsweise das Systemverhalten von Steuergeräten, eine Luft-, Wasser- oder Öltemperatur, eine Raddrehzahl, eine Pumpendrehzahl und dergleichen.

Insbesondere werden die Trainingsdaten bzw. die sensiblen Daten kryptografisch verschlüsselt im Gruppengerät abgelegt. Der Nutzername und das Passwort werden dann zum Entschlüsseln im Gruppengerät benötigt. Zur Übertragung an das Backend (Trainingseinheit) und/oder ein Frontend (Individualgerät - siehe die folgenden Absätze) werden die auszutauschenden Daten mit Hilfe des erfindungsgemäßen Verfahrens zur verschlüsselten Kommunikation abgesichert.

Das Verfahren zum sicheren Abspeichern von Daten kann ferner vorsehen, dass
- sich ein jeweiliger Nutzer mit seinem Nutzernamen und Passwort an einem nutzerspezifischen Individualgerät anmeldet, wobei während der Nutzer am Individualgerät angemeldet ist, nutzerspezifische Trainingsdaten vom Individualgerät sammelbar und als sensible Daten im Individualgerät speicherbar sind;
- ein jedes Individualgerät eine Kopplung mit dem Gruppengerät herstellt; und
- ein jedes Individualgerät eine Datensynchronisation mit dem Gruppengerät durchführt, wobei ausschließlich die vom jeweiligen Nutzer selbst generierten sensiblen Daten zwischen dem Individualgerät des Nutzers und dem Gruppengerät synchronisiert werden.

Die Verknüpfung von Individualgeräten mit dem Gruppengerät erhöht den Gestaltungsspielraum beim Austauschen von Daten. Die Verknüpfung kann unmittelbar oder mittelbar über das Backend erfolgen. Jeder Nutzer verfügt über ein eigenes Individualgerät. Beim dem Individualgerät kann es sich bevorzugt um ein mobiles Endgerät wie eine Smartwatch, ein Smartphone, ein Tabletcomputer, einen Laptop oder dergleichen handeln. Eine Kopplung zwischen Gruppengerät und Individualgerät, insbesondere in einem Fahrzeug, ist auf vielfältige und bewährte Art und Weise möglich. Es kommen kabelgebundene Kopplungstechniken, beispielsweise per Ethernet-Kabel oder USB-Kabel, infrage sowie drahtlose Kopplungstechniken, beispielsweise unter Nutzung von Wi-Fi, Bluetooth, ZigBee, NFC und dergleichen. Im Fernbereich ist eine Kopplung einschließlich Datensynchronisation über Mobilfunk mit bspw. 3G, 4G, 5G usw. möglich.

Es können Trainingsdaten bzw. sensible Daten sowohl im Individualgerät erzeugt und gespeichert werden, als auch im Gruppengerät. Bei der Synchronisation werden im jeweiligen Gerät erzeugte Daten mit dem jeweiligen anderen Gerät ausgetauscht und dabei dupliziert, sodass die entsprechenden Trainingsdaten bzw. sensiblen Daten sowohl im Individualgerät, als auch im Gruppengerät vorhanden sind. Da nur die Trainingsdaten bzw. sensiblen Daten des jeweiligen Nutzers übertragen, also für seine eigene Nutzung verwendet und zugreifbar gemacht werden, wird der Datenschutz noch weiter verbessert. So wird verhindert, dass die Trainingsdaten eines ersten Nutzers auf das Individualgerät eines zweiten Nutzers übertragen werden.

Da Trainingsdaten auch mit dem Individualgerät erzeugbar sind, kann ein erster Nutzer mit seinem Individualgerät Trainingsdaten erzeugen, während ein zweiter Nutzer gerade am Gruppengerät angemeldet ist. Dies ist beispielsweise der Fall, wenn der zweite Nutzer mit einem das Gruppengerät enthaltenden Fahrzeug fährt. Somit ist es möglich noch umfassender personenbezogene Trainingsdaten zu generieren und nicht-personenbezogene Trainingsdaten und Ereignisse zur Verbesserung der fahrzeugspezifischen und sicherheitsrelevanten Verhaltens- und Reaktionsmodelle, die für alle beim Fahren und Parken gelten, gemeinsam zu verwenden.

In einer besonders vorteilhaften Ausführung handelt es sich bei dem Gruppengerät um eine fahrzeugintegrierte Recheneinheit wie das Steuergerät eines Fahrzeuguntersystems, beispielsweise des Infotainment-Systems, oder einen zentralen Bordcomputer und bei den nutzerspezifischen Individualgeräten um die jeweiligen Smartphones von Fahrzeuginsassen. Das Gruppengerät kann in einem solchen Zusammenhang auch als Onboard-System bezeichnet werden und die Individualgeräte als Offboard-System(e).

Nicht-personenbezogene Trainingsdaten und Ereignisdaten zur Verbesserung der fahrzeugspezifischen und sicherheitsrelevanten Verhaltens- und Reaktionsmodelle, die für alle gelten, können dabei auch gemeinsam verwendet werden, da ein Austausch den Datenschutz nicht gefährdet.

Das Onboard-System kann vorteilhaft über ein jeweiliges Individualgerät als Frontend zur Bedienung und Anzeige personenbezogener Daten außerhalb des Fahrzeugs (engl. offboard) durch Verknüpfung mit dem Benutzerkonto im Backend gekoppelt werden, sodass das Individualgerät als vertrauenswürdig für das Fahrzeug und das Backend bei Übertragung von personenbezogenen Trainingsdaten und prognostizierten Ergebnissen ohne laufendes Onboad-System über das Backend verwendbar ist, wo Maschinenlernmodelle gespeichert sind und maschinell gelernt werden.

Eine vorteilhafte Ausgestaltung des erfindungsgemäßen Verfahrens zur verschlüsselten Kommunikation zwischen Computersystemen sieht vor, dass die Trainingseinheit nach dem Trainieren des Maschinenlernmodells dieses in einer externen Maschinenlernmodellvorhalteeinheit hinterlegt und danach sämtliche Trainingsdaten, den ersten AES-Einmalschlüssel und das trainierte Maschinenlernmodell, löscht. Das Maschinenlernmodell wird dabei unpersonalisiert hinterlegt. Hierdurch werden die Datensicherheit und der Datenschutz noch weiter verbessert. So werden zum Trainieren des Maschinenlernmodells relevante Informationen lediglich während des eigentlichen Trainingsvorgangs in der Trainingseinheit vorgehalten. Danach werden die entsprechenden relevanten Daten gelöscht. Die Maschinenlernmodellvorhalteeinheit dient dabei als Datenspeicher für trainierte und unpersonalisierte Maschinenlernmodelle. Die Maschinenlernmodellvorhalteeinheit kann durch ein separates Computersystem wie ein Desktopcomputer, ein Server oder Serververbund ausgebildet sein. Die Trainingseinheit und die Maschinenlernmodellvorhalteeinheit können in ein gemeinsames Netzwerk integriert sein, beispielsweise in ein gemeinsames Local-Area-Network (LAN). Eine Kommunikation zwischen Trainingseinheit und Maschinenlernmodellvorhalteeinheit kann auch über das Internet erfolgen.

Bevorzugt liest die Trainingseinheit ein bestehendes Maschinenlernmodell aus der Maschinenlernmodellvorhalteeinheit aus und trainiert dieses mit den Trainingsdaten weiter. Generell wäre es möglich, Maschinenlernmodelle in der Trainingseinheit vorzuhalten. In diesem Falle kann die Trainingseinheit ohne weiteres verschiedene Maschinenlernmodelle weitertrainieren. Eine besonders hohe Datensicherheit ist jedoch möglich unter Verwendung der Maschinenlernmodellvorhalteeinheit. In diesem Falle kann die Trainingseinheit, entweder ohne Zugriff auf die Maschinenlernmodellvorhalteeinheit ein neues Maschinenlernmodell initial mit den Trainingsdaten trainieren, oder aber ein bereits trainiertes Maschinenlernmodell auslesen und weitertrainieren. Dies ermöglicht es ein und dasselbe Maschinenlernmodell oder auch unterschiedliche Maschinenlernmodelle für eine Gruppe an Individuen zu trainieren. Hierzu werden nutzerspezifische bzw. individuumspezifische Trainingsdaten erhoben und zum Trainieren verwendet. Dies ermöglicht eine datenschutzkonforme und anonyme Weiterbildung besagter Maschinenlernmodelle.

Entsprechend einer weiteren vorteilhaften Ausgestaltung des erfindungsgemäßen Verfahrens zur verschlüsselten Kommunikation, wird ein in ein Fahrzeug integriertes Endgerät in Form eines Gruppengeräts oder ein zum Fahrzeug extern ausgeführtes mobiles Endgerät in Form eines Individualgeräts als Recheneinheit verwendet. Hierdurch lässt sich der Datenschutz zum Trainieren des Maschinenlernmodells noch weiter erhöhen. So können mit ein und derselben Recheneinheit Trainingsdaten von unterschiedlichen Nutzern generiert und berücksichtigt werden, unpersonalisierte Maschinenlernmodelle im Onboard- und Backend-System für fahrzeugspezifische und sicherheitsrelevante Verhaltens- und Reaktionsmodelle, die für alle gelten, gemeinsam genutzt werden, während personalisierte Maschinenlernmodelle und Endergebnisse nur über Individualgeräte oder mit deren über Nutzernamen und nutzerspezifischen Passwörter geschützten privaten Schlüsseln im Onboad-System entschlüsselt angezeigt werden. Insbesondere wird das nutzerspezifische RSA-Schlüsselpaar dann vom Gruppengerät (für den jeweils angemeldeten Nutzer), bevorzugt von einem jeweiligen Individualgerät, erzeugt. Beispielsweise können von einem Smartphone besagte RSA-Schlüsselpaare für jeden Nutzer individuell erzeugt werden und entsprechende private Schlüssel und öffentliche Schlüssel beim Synchronisieren an das Gruppengerät zum Hinterlegen verteilt werden. Dies ermöglicht es dem Gruppengerät stellvertretend für die Individualgeräte Trainingsdaten an die Trainingseinheit zu übermitteln und entsprechend bei einem zurückerhaltenen Ergebnis dieses zu entschlüsseln und zu verarbeiten.

Eine vorteilhafte Weiterbildung des Verfahrens sieht ferner vor, dass die Recheneinheit das RSA-Schlüsselpaar nach dem Generieren in einer externen RSA-Schlüsselvorhalteeinheit hinterlegt. Die RSA-Schlüsselvorhalteeinheit ist besonders bevorzugt kryptografisch gegenüber einer Kompromittierung durch unautorisierte Nutzer abgesichert. Die RSA-Schlüsselvorhalteeinheit dient zur Wiederherstellung verlorengegangener Schlüssel. In der RSA-Schlüsselvorhalteeinheit können hinterlegte RSA-Schlüsselpaare auch aktualisiert werden, sollten sich die Ursprungsschlüssel geändert haben.

So kann die Recheneinheit, insbesondere ein Individualgerät oder Gruppengerät, die RSA-Schlüsselvorhalteeinheit kontaktieren und nach Übermitteln von Nutzername und nutzerspezifischem Passwort das RSA-Schlüsselpaar des Nutzers wiederherstellen.

Eine weitere vorteilhafte Ausgestaltung des erfindungsgemäßen Verfahrens sieht ferner vor, dass
- ein Individualgerät einen Aufweckbefehl an ein schlafendes Gruppengerät übermittelt, woraufhin das Gruppengerät aus einem Standby-Modus aufgeweckt wird;
- die verschlüsselten Ergebnisdaten und der verschlüsselte zweite AES-Einmalschlüssel vom Individualgerät an das Gruppengerät weitergeleitet werden; und
- das Gruppengerät den zweiten AES-Einmalschlüssel mit dem privaten Schlüssel entschlüsselt und mit dem entschlüsselten zweiten AES-Einmalschlüssel die Ergebnisdaten entschlüsselt.

Generell können wie bereits erwähnt ein Individualgerät oder das Gruppengerät als Recheneinheit fungieren, sodass das Entschlüsseln der Ergebnisdaten ohnehin vom Individualgerät oder dem Gruppengerät möglich ist. Es kann jedoch auch passieren, dass die Ergebnisdaten speziell für das Gruppengerät relevant ist, nicht jedoch für das Individualgerät. Ferner kann das Gruppengerät über einen Schlafmodus bzw. Standby-Modus verfügen. Das Gruppengerät lässt sich dann durch das Ausgeben des Aufweckbefehls von einem Individualgerät aufwecken und zur Durchführung der relevanten Verfahrensschritte verwenden. Insbesondere können in einem solchen Fall die Trainingsdaten vom Individualgerät an die Trainingseinheit übermittelt worden sein.

Erfindungsgemäß umfasst ein Fahrzeug ein im vorigen beschriebenes Gruppengerät. Das Gruppengerät ist dabei zur Durchführung des erfindungsgemäßen Verfahrens zum sichern Abspeichern von Daten und zur Durchführung des erfindungsgemäßen Verfahrens zur verschlüsselten Kommunikation zwischen Computersystemen ausgelegt. Bei dem Fahrzeug kann es sich um ein beliebiges Fahrzeug wie einen Pkw, Lkw, Transporter, Bus, eine Baumaschine oder dergleichen handeln. Generell kann es sich auch um ein Schienenfahrzeug, Wasserfahrzeug oder Luftfahrzeug handeln.

Weitere vorteilhafte Ausgestaltungen des erfindungsgemäßen Verfahrens und des Fahrzeugs ergeben sich auch aus den Ausführungsbeispielen, welche nachfolgend unter Bezugnahme auf die Figuren näher beschrieben werden.

Dabei zeigen:
- Fig. 1: eine schematisierte Darstellung eines Systems zum datenschutzkonformen Trainieren eines Maschinenlernmodells; und
- Fig. 2: ein Ablaufdiagramm eines erfindungsgemäßen Verfahrens.

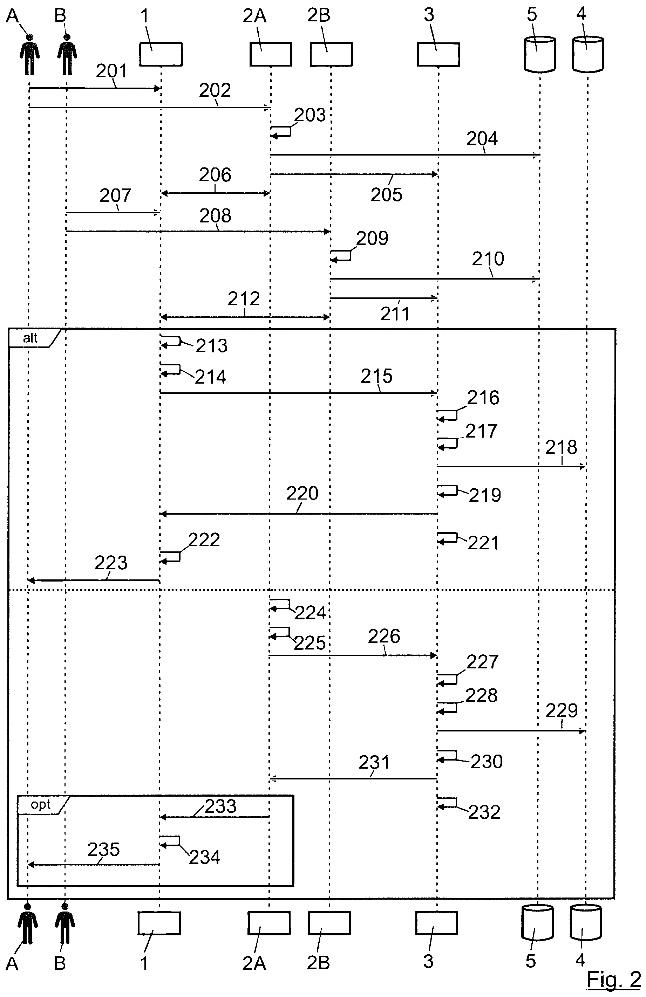

Zum Trainieren von Maschinenlernmodellen, auch als maschinelles Lernen bezeichnet, werden vergleichsweise große Datenmengen benötigt. Typischerweise generieren in Figur 2 dargestellte Nutzer A, B hierzu verwendete Trainingsdaten. Diese Trainingsdaten können Rückschlüsse auf das Nutzerverhalten zulassen, was den Datenschutz der Nutzer A, B gefährdet. Ziel eines erfindungsgemäßen Verfahrens zur verschlüsselten Kommunikation zwischen Computersystemen im Kontext des Trainierens eines Maschinenlernmodells ist es daher den Datenschutz und die Cybersicherheit zu wahren.

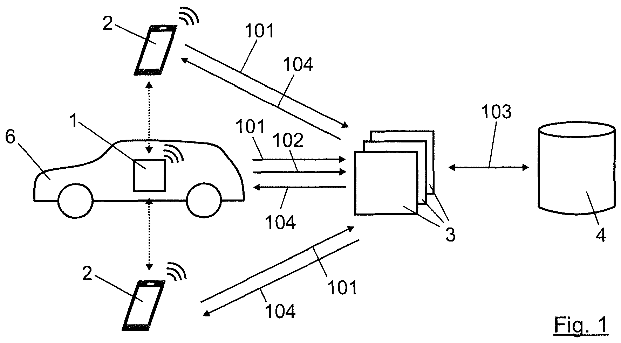

Ein hierzu geeignetes System ist in Figur 1 dargestellt.

Das System umfasst gemäß einer möglichen Ausführungsform ein in ein Fahrzeug 6 integriertes Gruppengerät 1, auch als Onboad-System bezeichnet, beispielsweise einen zentralen Bordcomputer. Mit dem Gruppengerät 1 sind für jeden Nutzer A, B jeweils ein nutzerspezifisches Individualgerät 2 gekoppelt, wodurch eine vertrauenswürdige Kommunikation zwischen dem gemeinsam nutzbaren Onboard-System und den einzelnen Individualgeräten bei weiteren Verfahrensschritten sichergestellt wird. Mit dem Gruppengerät 1 und/oder den Individualgeräten 2 lassen sich Trainingsdaten generieren, welche als sensible Daten durch einen Nutzernamen und nutzerspezifisches Passwort vor einem Zugriff durch Unbefugte geschützt im entsprechenden Gruppengerät 1 und Individualgerät 2 gespeichert werden. Das Gruppengerät 1 und die Individualgeräte 2 können eine Synchronisation durchführen, sodass Trainingsdaten dupliziert und in entsprechenden beiden Geräten vorgehalten werden. Dabei werden nur diejenigen Trainingsdaten an das Individualgerät 2 desjenigen Nutzers übertragen, die auch vom jeweiligen Nutzer selbst generiert wurden.

Angedeutet durch einen Pfeil 101 können personenbezogene Daten verschlüsselt an eine Trainingseinheit 3 übermittelt werden. Das erfindungsgemäße System kann mehrere Trainingseinheiten 3 aufweisen, was eine massive Datenverarbeitung erlaubt. Angedeutet durch einen Pfeil 102 können Daten, die keinerlei Rückschlüsse auf eine bestimmte Person oder ein bestimmtes Gerät zulassen, an besagte Trainingseinheit 3 übertragen werden.

Die Trainingseinheit 3 dient dabei allgemein zur Datenverarbeitung, bzw. im hier diskutierten Kontext zum Trainieren eines oder mehrerer Maschinenlernmodelle. Die zum Training verwendeten Trainingsdaten werden dabei bevorzugt nur so lange in der Trainingseinheit 3 vorgehalten, während das Training des Maschinenlernmodells selbst erfolgt. Danach werden die Trainingsdaten gelöscht. Ferner umfasst das System eine Maschinenlernmodellvorhalteeinheit 4. Angedeutet durch einen Pfeil 103 kann eine jeweilige Trainingseinheit 3 Maschinenlernmodelle mit der Maschinenlernmodellvorhalteeinheit 4 austauschen. So können neu und initial trainierte Maschinenlernmodelle in der Maschinenlernmodellvorhalteeinheit 4 hinterlegt werden sowie bereits angelernte Maschinenlernmodelle bezogen werden und so in der Trainingseinheit 3 weitertrainiert werden. Entsprechend können weitertrainierte Maschinenlernmodelle zurück an die Maschinenlernmodellvorhalteeinheit 4 übertragen werden. Während des Trainings anfallende Ergebnisse, beispielsweise ein fertig trainiertes Maschinenlernmodell oder aber auch das Endergebnis, welches das Maschinenlernmodell beim Training berechnet hat, können angedeutet durch einen Pfeil 104 verschlüsselt an das entsprechende Gruppengerät 1 und/oder Individualgerät 2 zurückübertragen werden.

Figur 2 zeigt dabei den Verfahrensablauf im Detail.

In dem in Figur 2 dargestellten Ablaufdiagramm eingezeichnet sind ein Nutzer A, ein Nutzer B, das Gruppengerät 1, das Individualgerät 2A des Nutzers A, das Individualgerät 2B des Nutzers B, die Trainingseinheit 3, die Maschinenlernmodellvorhalteeinheit 4 sowie eine RSA-Schlüsselvorhalteeinheit 5.

In einem Schritt 201 startet und registriert sich der Nutzer A das erste Mal am Gruppengerät 1 bzw. loggt sich mit seinem Nutzernamen und Passwort ein. Im Schritt 202 startet und registriert bzw. loggt sich der Nutzer A an seinem Individualgerät 2A ein.

Im Schritt 203 generiert das Individualgerät 2A das dem Nutzer A zugehörige RSA-Schlüsselpaar, also den privaten und öffentlichen Schlüssel. Im optionalen Schritt 204 werden dieser öffentliche und private Schlüssel in der RSA-Schlüsselvorhalteeinheit 5 als Backup hinterlegt. Im Schritt 205 wird der öffentliche Schlüssel ohne jegliche Informationen, die eine Nutzeridentität bzw. Geräteidentität preisgeben könnten, in der Trainingseinheit 3 hinterlegt und dort im Schlüsselspeicher abgespeichert. Im Schlüsselspeicher können sich bereits eine Vielzahl anderer öffentlicher Schlüssel von weiteren Recheneinheiten befinden.

Im Schritt 206 erfolgt eine Kopplung von Gruppengerät 1 und dem Individualgerät 2A des Nutzers A. Dabei werden personenbezogene Daten inklusive des vom Individualgerät 2A erzeugten RSA-Schlüsselpaars synchronisiert.

Im Schritt 207 startet und registriert sich bzw. meldet sich der Nutzer B am Gruppengerät 1 an. Im Verfahrensschritt 208 startet und registriert bzw. meldet sich der Nutzer B an seinem Individualgerät 2B an.

Das Vorgehen ist analog zum Nutzer A. So wird im Schritt 209 das RSA-Schlüsselpaar für den Nutzer B erzeugt und dieses analog optional im Schritt 210 an die RSA-Schlüsselvorhalteeinheit 5 für den Notfall zur Wiederherstellung besagter Schlüssel übertragen. Im Schritt 211 wird der öffentliche Schlüssel des Nutzers B ebenfalls ohne jegliche Informationen, die das Rückschließen auf die Identität des Nutzers B ermöglichen, im Schlüsselspeicher der Trainingseinheit 3 abgelegt.

Im Schritt 212 wird dann das Individualgerät 2B mit dem Gruppengerät 1 synchronisiert.

Im weiteren Verlauf sind zwei Alternativen dargestellt, die zeigen, wie Trainingsdaten zum Trainieren eines Maschinenlernmodells mit der Trainingseinheit 3 ausgetauscht werden können. Gemäß der Schritte 213 bis 223 werden Trainingsdaten vom Gruppengerät 1 übermittelt. Entsprechend der Schritte 224 bis 232 werden die Trainingsdaten hingegen von dem Individualgerät 2A des Nutzers A übermittelt.

Im Schritt 213 erzeugt das Gruppengerät 1 einen ersten AES-Einmalschlüssel. Im Schritt 214 werden Trainingsdaten mit dem ersten AES-Einmalschlüssel verschlüsselt und darauf der erste AES-Einmalschlüssel mit dem privaten Schlüssel des Nutzers A verschlüsselt. In diesem Falle wird der private Schlüssel des Nutzers A verwendet, da gerade der Nutzer A am Gruppengerät 1 angemeldet ist. Generell wird hier jedoch der Schlüssel des jeweils angemeldeten Nutzers verwendet.

Im Schritt 215 werden die verschlüsselten Trainingsdaten und der verschlüsselte erste AES-Einmalschlüssel an die Trainingseinheit 3 übermittelt.

Im Schritt 216 wendet die Trainingseinheit 3 sämtliche, das heißt von beliebig vielen Recheneinheiten bezogene, im Schlüsselspeicher hinterlegten öffentlichen Schlüssel auf die so empfangenen Daten an, um diese zu entschlüsseln. Dabei wird irgendwann der passende Schlüssel gefunden, was das Entschlüsseln des ersten AES-Einmalschlüssels erlaubt. Im Schritt 217 werden die Trainingsdaten mit dem entschlüsselten ersten AES-Einmalschlüssel entschlüsselt. Dann erfolgt das Training des Maschinenlernmodells. Im Schritt 218 kann das derart trainierte Maschinenlernmodell in der Maschinenlernmodellvorhalteeinheit 4 abgelegt werden. Wird ein Maschinenlernmodell nicht initial neu trainiert, so könnte auch ein bestehendes Maschinenlernmodell aus der Maschinenlernmodellvorhalteeinheit 4 vor dem Training geladen werden, um dieses weiter zu trainieren (nicht dargestellt). Die durch Anwendung bzw. Training des Maschinenlernmodells berechneten Ergebnisdaten werden im Schritt 219 verschlüsselt. Hierzu erzeugt die Trainingseinheit 3 einen zweiten AES-Einmalschlüssel und verschlüsselt damit die Ergebnisdaten. Der zweite AES-Einmalschlüssel wird dann mit dem im vorigen aufgefundenen öffentlichen Schlüssel verschlüsselt. Im Schritt 220 werden dann die verschlüsselten Ergebnisdaten und der verschlüsselte zweite AES-Einmalschlüssel an das Gruppengerät 1 zurück übermittelt.

Im Schritt 221 löscht dann die Trainingseinheit 3 sämtliche relevanten Daten wie das trainierte Maschinenlernmodell, die verwendeten Trainingsdaten und den ersten AES-Einmalschlüssel. Somit können die entsprechenden Informationen bei einem Angriff nicht mehr manipuliert oder entwendet werden, was entsprechend die Cybersicherheit und Datensicherheit verbessert.

Das Gruppengerät 1 entschlüsselt im Schritt 222 den zweiten AES-Einmalschlüssel mit dem privaten Schlüssel. Mit dem entschlüsselten zweiten AES-Einmalschlüssel entschlüsselt danach das Gruppengerät 1 die von der Trainingseinheit 3 bezogenen Ergebnisdaten. Im Schritt 223 wird das von den Ergebnisdaten umfasste Ergebnis, bspw. in aufbereiteter Form, an den Nutzer A ausgegeben.

Der Ablauf unter Verwendung des Individualgeräts 2A ist analog. Im Schritt 224 erzeugt das Individualgerät 2A den ersten AES-Einmalschlüssel. Im Schritt 225 verschlüsselt das Individualgerät 2A die Trainingsdaten mit dem ersten AES-Einmalschlüssel und diesen wiederum mit dem privaten Schlüssel. Im Schritt 226 werden die verschlüsselten Trainingsdaten und der verschlüsselte erste AES-Einmalschlüssel an die Trainingseinheit 3 übertragen.

Im Schritt 227 entschlüsselt die Trainingseinheit 3 den ersten AES-Einmalschlüssel mit einem passenden aus dem Schlüsselspeicher ausgelesenen öffentlichen Schlüssel. Im Schritt 228 entschlüsselt die Trainingseinheit 3 dann die verschlüsselten Trainingsdaten mit dem so entschlüsselten ersten AES-Einmalschlüssel. Danach erfolgt das Training des Maschinenlernmodells. Im optionalen Schritt 229 kann das derart trainierte Maschinenlernmodell in der Maschinenlernmodellvorhalteeinheit 4 hinterlegt werden. Analog könnten auch hier (nicht dargestellt) vorher ein bereits trainiertes Maschinenlernmodell geladen werden, um dieses weiter zu trainieren.

Im Schritt 230 erzeugt die Trainingseinheit 3 einen zweiten AES-Einmalschlüssel und verschlüsselt damit die während des Trainings des Maschinenlernmodells erzeugten Ergebnisdaten. Der zweite AES-Einmalschlüssel wird anschließend mit dem im vorigen aufgefundenen öffentlichen Schlüssel verschlüsselt. Im Schritt 231 werden dann die verschlüsselten Ergebnisdaten und der verschlüsselte zweite AES-Einmalschlüssel zurück an das Individualgerät 2A des Nutzers A übermittelt. Im Schritt 232 löscht die Trainingseinheit 3 besagte relevante Daten, also das trainierte Maschinenlernmodell, die Trainingsdaten und den ersten AES-Einmalschlüssel.

Danach kann eine Ausgabe der entschlüsselten Ergebnisdaten bzw. Ergebnisse an den Nutzer erfolgen. Dies kann über das Individualgerät 2A oder auch das Gruppengerät 1 erfolgen. Hierzu ist im Folgenden ein optionaler Spezialfall dargestellt, bei dem eine Ausgabe über das Gruppengerät 1 erfolgt, wobei sich dieses aktuell in einem Standby-Modus befindet. Das schlafende Gruppengerät 1 wird durch das Individualgerät 2A aufgeweckt, um die Ausgabe der Ergebnisse zu ermöglichen. Hierzu sendet das Individualgerät 2A im Schritt 233 einen Aufweckbefehl an das schlafende Gruppengerät 1. Anschließend leitet das Individualgerät 2A das verschlüsselte Ergebnis und den verschlüsselten zweiten AES-Einmalschlüssel an das Gruppengerät 1 weiter. Im Schritt 234 entschlüsselt das Gruppengerät 1 besagte Daten. Hierzu entschlüsselt das Gruppengerät 1 den zweiten AES-Einmalschlüssel mit dem privaten Schlüssel und das verschlüsselte Ergebnis mit dem so erhaltenen entschlüsselten zweiten AES-Einmalschlüssel. Im Schritt 235 erfolgt dann die Ausgabe an den Nutzer A.

## Patentansprüche

1. Verfahren zur verschlüsselten Kommunikation zwischen Computersystemen, **dadurch gekennzeichnet, dass**
- eine Recheneinheit Trainingsdaten bereitstellt;
- die Recheneinheit ein RSA-Schlüsselpaar, umfassend einen privaten Schlüssel und einen öffentlichen Schlüssel bereitstellt;
- die Recheneinheit den öffentlichen Schlüssel in einem Schlüsselspeicher einer externen Trainingseinheit (3) hinterlegt;
- die Recheneinheit einen ersten AES-Einmalschlüssel erzeugt;
- die Recheneinheit die Trainingsdaten mit dem ersten AES-Einmalschlüssel verschlüsselt;
- die Recheneinheit den ersten AES-Einmalschlüssel mit dem privaten Schlüssel verschlüsselt;
- die Recheneinheit die verschlüsselten Trainingsdaten und den verschlüsselten ersten AES-Einmalschlüssel an die Trainingseinheit (3) übermittelt;
- die Trainingseinheit (3) sämtliche in dem Schlüsselspeicher hinterlegten öffentlichen Schlüssel zum Entschlüsseln des empfangenen ersten AES-Einmalschlüssels durchprobiert, solange bis die Trainingseinheit (3) den ersten AES-Einmalschlüssel entschlüsselt;
- die Trainingseinheit (3) mit dem entschlüsselten ersten AES-Einmalschlüssel die Trainingsdaten entschlüsselt;
- die Trainingseinheit (3) die Trainingsdaten verarbeitet;
- die Trainingseinheit (3) einen zweiten AES-Einmalschlüssel erzeugt;
- die Trainingseinheit (3) im Zuge der Verarbeitung der Trainingsdaten Ergebnisdaten berechnet und die Ergebnisdaten mit dem zweiten AES-Einmalschlüssel verschlüsselt;
- die Trainingseinheit (3) den zweiten AES-Einmalschlüssel mit dem aus dem Schlüsselspeicher aufgefundenen passenden öffentlichen Schlüssel verschlüsselt;
- die Trainingseinheit (3) die verschlüsselten Ergebnisdaten und den verschlüsselten zweiten AES-Einmalschlüssel an die Recheneinheit zurückübermittelt; und
- die Recheneinheit den zweiten AES-Einmalschlüssel mit dem privaten Schlüssel entschlüsselt und mit dem entschlüsselten zweiten AES-Einmalschlüssel die Ergebnisdaten entschlüsselt.

2. Verfahren nach Anspruch 1,
**dadurch gekennzeichnet, dass**
das Verarbeiten der Trainingsdaten durch die Trainingseinheit (3) das Trainieren eines Maschinenlernmodells umfasst.

3. Verfahren nach Anspruch 2,
**dadurch gekennzeichnet, dass**
die Trainingseinheit (3) nach dem Trainieren des Maschinenlernmodells dieses in einer externen Maschinenlernmodellvorhalteeinheit (4) hinterlegt und danach sämtliche Trainingsdaten, den ersten AES-Einmalschlüssel und das trainierte Maschinenlernmodell löscht.

4. Verfahren nach Anspruch 3,
**dadurch gekennzeichnet, dass**
die Trainingseinheit (3) ein bestehendes Maschinenlernmodell aus der Maschinenlernmodellvorhalteeinheit (4) ausliest und dieses mit den Trainingsdaten weitertrainiert.

5. Verfahren nach einem der Ansprüche 1 bis 4,
**dadurch gekennzeichnet, dass**
ein in ein Fahrzeug (6) integriertes Endgerät in Form eines Gruppengeräts (1) oder ein zum Fahrzeug (6) extern ausgeführtes mobiles Endgerät in Form eines Individualgeräts (2) als Recheneinheit verwendet wird.

6. Verfahren nach einem der Ansprüche 1 bis 5,
**dadurch gekennzeichnet, dass**
die Recheneinheit das RSA-Schlüsselpaar nach dem Generieren in einer externen RSA-Schlüsselvorhalteeinheit (5) hinterlegt.

7. Verfahren nach Anspruch 5 oder 6,
**dadurch gekennzeichnet, dass**
- ein Individualgerät (2) einen Aufweckbefehl an ein schlafendes Gruppengerät (1) übermittelt, woraufhin das Gruppengerät (1) aus einem Standby-Modus aufgeweckt wird;
- die verschlüsselten Ergebnisdaten und der verschlüsselte zweite AES-Einmalschlüssel vom Individualgerät (2) an das Gruppengerät (1) weitergeleitet werden; und
- das Gruppengerät (1) den zweiten AES-Einmalschlüssel mit dem privaten Schlüssel entschlüsselt und mit dem entschlüsselten zweiten AES-Einmalschlüssel die Ergebnisdaten entschlüsselt.

8. Fahrzeug (6),
**gekennzeichnet durch**
ein in einem Verfahren nach einem der Ansprüche 5 bis 7 genutztes Gruppengerät (1).

## Claims

1. Method for encrypted communication between computer systems,
**characterized in that**
- a computing unit provides training data;
- the computing unit provides an RSA key pair comprising a private key and a public key;
- the computing unit stores the public key in a key memory of an external training unit (3);
- the computing unit generates a first AES one-time key;
- the computing unit encrypts the training data with the first AES one-time key;
- the computing unit encrypts the first AES one-time key with the private key;
- the computing unit transmits the encrypted training data and the encrypted first AES one-time key to the training unit (3);
- the training unit (3) tries all public keys stored in the key memory to decrypt the received first AES one-time key until the training unit (3) decrypts the first AES one-time key;
- the training unit (3) decrypts the training data using the decrypted first AES one-time key;
- the training unit (3) processes the training data;
- the training unit (3) generates a second AES one-time key;
- the training unit (3) calculates result data during the processing of the training data and encrypts the result data with the second AES one-time key;
- the training unit (3) encrypts the second AES one-time key with the matching public key found from the key memory;
- the training unit (3) transmits the encrypted result data and the encrypted second AES one-time key back to the computing unit; and
- the computing unit decrypts the second AES one-time key with the private key and decrypts the result data with the decrypted second AES one-time key.

2. Method according to claim 1,
**characterized in that**
the processing of the training data by the training unit (3) comprises training a machine learning model.

3. Method according to claim 2,
**characterized in that**
the training unit (3), after training the machine learning model, stores it in an external machine learning model holding unit (4) and then deletes all training data, the first AES one-time key and the trained machine learning model.

4. Method according to claim 3,
**characterized in that**
the training unit (3) reads out an existing machine learning model from the machine learning model holding unit (4) and further trains it with the training data.

5. Method according to any of claims 1 to 4,
**characterized in that**
a terminal integrated into a vehicle (6) in the form of a group device (1) or a mobile terminal external to the vehicle (6) in the form of an individual device (2) is used as the computing unit.

6. Method according to any of claims 1 to 5,
**characterized in that**
the computing unit stores the RSA key pair in an external RSA key holding unit (5) after generation.

7. Method according to claim 5 or 6,
**characterized in that**
- an individual device (2) transmits a wake-up command to a sleeping group device (1), whereupon the group device (1) is woken up from a standby mode;
- the encrypted result data and the encrypted second AES one-time key are forwarded from the individual device (2) to the group device (1); and
- the group device (1) decrypts the second AES one-time key with the private key and decrypts the result data with the decrypted second AES one-time key.

8. Vehicle (6),
**characterized by**
a group device (1) used in a method according to any of claims 5 to 7.

## Revendications

1. Procédé permettant la communication chiffrée entre des systèmes informatiques, **caractérisé en ce que**
- une unité de calcul fournit des données d'entraînement ;
- l'unité de calcul fournit une paire de clés RSA comprenant une clé privée et une clé publique ;
- l'unité de calcul dépose la clé publique dans une mémoire de clés d'une unité d'entraînement (3) externe ;
- l'unité de calcul génère une première clé unique AES ;
- l'unité de calcul chiffre les données d'entraînement avec la première clé unique AES ;
- l'unité de calcul chiffre la première clé unique AES avec la clé privée ;
- l'unité de calcul transmet les données d'entraînement chiffrées et la première clé unique AES chiffrée à l'unité d'entraînement (3) ;
- l'unité d'entraînement (3) essaie toutes les clés publiques enregistrées dans la mémoire de clés les unes après les autres pour le déchiffrement de la première clé unique AES reçue jusqu'à ce que l'unité d'entraînement (3) déchiffre la première clé unique AES ;
- l'unité d'entraînement (3) déchiffre les données d'entraînement avec la première clé unique AES déchiffrée ;
- l'unité d'entraînement (3) traite les données d'entraînement ;
- l'unité d'entraînement (3) génère une seconde clé unique AES ;
- l'unité d'entraînement (3) calcule des données de résultat au cours du traitement des données d'entraînement et chiffre les données de résultat avec la seconde clé unique AES ;
- l'unité d'entraînement (3) chiffre la seconde clé unique AES avec la clé publique correspondante repérée dans la mémoire de clés ;
- l'unité d'entraînement (3) retransmet les données de résultat chiffrées et la seconde clé unique AES chiffrée à l'unité de calcul ; et
- l'unité de calcul déchiffre la seconde clé unique AES avec la clé privée et déchiffre les données de résultat avec la seconde clé unique AES déchiffrée.

2. Procédé selon la revendication 1,
**caractérisé en ce que**
le traitement des données d'entraînement par l'unité d'entraînement (3) comprend l'entraînement d'un modèle d'apprentissage machine.

3. Procédé selon la revendication 2,
**caractérisé en ce que**
l'unité d'entraînement (3), après l'entraînement du modèle d'apprentissage machine, dépose celui-ci dans une unité de conservation de modèles d'apprentissage machine (4) externe et efface ensuite toutes les données d'entraînement, la première clé unique AES et le modèle d'apprentissage machine entraîné.

4. Procédé selon la revendication 3,
**caractérisé en ce que**
l'unité d'entraînement (3) lit un modèle d'apprentissage machine existant à partir de l'unité de conservation de modèles d'apprentissage machine (4) et continue de l'entraîner avec les données d'entraînement.

5. Procédé selon l'une des revendications 1 à 4,
**caractérisé en ce que**
un terminal intégré dans un véhicule (6) sous la forme d'un appareil formant groupe (1) ou un terminal mobile exécuté de manière externe au véhicule (6) sous la forme d'un appareil individuel (2) est utilisé comme unité de calcul.

6. Procédé selon l'une des revendications 1 à 5,
**caractérisé en ce que**
l'unité de calcul dépose la paire de clés RSA après la génération dans une unité de conservation de clés RSA (5) externe.

7. Procédé selon la revendication 5 ou 6,
**caractérisé en ce que**
- un appareil individuel (2) transmet une instruction de réveil à un appareil formant groupe (1) en veille, moyennant quoi l'appareil formant groupe (1) est réveillé d'un mode de veille ;
- les données de résultat chiffrées et la seconde clé unique AES chiffrée sont transmises par l'appareil individuel (2) à l'appareil formant groupe (1) ; et
- l'appareil formant groupe (1) déchiffre la seconde clé unique AES avec la clé privée et déchiffre les données de résultat avec la seconde clé unique AES déchiffrée.

8. Véhicule (6),
**caractérisé par**
un dispositif formant groupe (1) utilisé dans un procédé selon l'une des revendications 5 à 7.
